Europäisches Patentamt

European Patent Office

Office européen des brevets

(19)

(11) **EP 0 955 091 B1**

(12) **FASCICULE DE BREVET EUROPEEN**

(45) Date de publication et mention
de la délivrance du brevet:
**27.07.2005 Bulletin 2005/30**

(51) Int Cl.7: **B01J 29/10**, C10G 47/20,
B01J 29/16

(21) Numéro de dépôt: **99400973.6**

(22) Date de dépôt: **21.04.1999**

(54) **Catalyseur à base de zéolithe y contenant de silicium, utilisable en hydrocraquage**

Katalysator auf Basis von Silicium enthaltenden Y-Zeolith verwendbar für Hydrocracking

Catalyst based on zeolite y containing silicon suitable for hydrocracking

(84) Etats contractants désignés:
**DE ES IT NL**

(30) Priorité: **06.05.1998 FR 9805734**

(43) Date de publication de la demande:
**10.11.1999 Bulletin 1999/45**

(73) Titulaire: **Institut Français du Pétrole**
**92852 Rueil Malmaison Cédex (FR)**

(72) Inventeurs:
• **Kasztelan, Slavik**
**92500 Rueil Malmaison (FR)**
• **George-Marchal, Nathalie**
**69230 Saint Genis Laval (FR)**
• **Benazzi, Eric**
**78400 Chatou (FR)**

(56) Documents cités:
EP-A- 0 372 632          FR-A- 2 758 278
GB-A- 2 063 700          US-A- 4 080 284
US-A- 4 585 748          US-A- 4 894 142
US-A- 4 906 599          US-A- 5 525 209

Remarques:
Le dossier contient des informations techniques
présentées postérieurement au dépôt de la
demande et ne figurant pas dans le présent
fascicule.

## Description

La présente invention concerne un catalyseur renfermant une matrice, au moins une zéolithe Y particulière, au moins un métal hydro-déshydrogénant, du bore et du silicium déposé sur le catalyseur par imprégnation.

La présente invention concerne également les procédés de préparation du dit catalyseur, ainsi que son utilisation pour l'hydrocraquage de charges hydrocarbonées telles que les coupes pétrolières, les coupes issues du charbon ou les hydrocarbures produits à partir du gaz naturel. Les dites charges hydrocarbonées contiennent des composés aromatiques, et/ou oléfiniques, et/ou naphténiques, et/ou paraffiniques,et éventuellement des métaux, et/ou de l'azote, et/ou de l'oxygène et/ou du soufre.

L'hydrocraquage prend une importance de plus en plus grande dans la pratique du raffinage avec la nécessité croissante de convertir des fractions lourdes en fractions plus légères valorisables en tant que carburants. Ceci résulte de la demande croissante en carburants. Cette valorisation implique une réduction relativement importante du poids moléculaire des constituants lourds, qui peut être obtenue par exemple au moyen de réactions de craquage.

Le procédé d'hydrocraquage catalytique met en oeuvre des catalyseurs contenant d'une part une fonction hydrogénante, désulfurante et déazotante apportée par la phase active à base de métaux de transition et d'autre part une fonction acide, en général apportée par la matrice amorphe ou une zéolithe ou encore leur mélange. Un bon catalyseur d'hydrocraquage sera constitué d'une fonction hydrogénante et d'une fonction acide bien ajustées. L'hydrocraquage est employé pour traiter des charges telles que les gazoles sous vide, les résidus atmosphériques ou sous vide, désasphaltés ou non. L'hydrocraquage permet d'obtenir des coupes plus légères fortement purifiées c'est à dire à faible teneur en soufre, azote et métaux.

Il est donc important d'augmenter l'activité et la sélectivité des catalyseurs d'hydrocraquage. L'un des moyens consiste à acidifier la matrice sans empoisonner l'activité de la phase hydrogénante à base de métaux de transition ni l'activité craquante de la phase acide à base de zéolithe.

Différentes formules catalytiques pour l'hydrocraquage à base de zéolite Y peuvent être recensées dans l'art antérieur.

Le document US-A-5 525 209 décrit un procédé de traitement de charges hydrocarbonées lourdes pour la production améliorée de distillats moyens et de bases huiles utilisant un catalyseur consistant essentiellement en :

a) un support pouvant contenir de la silice, choisi parmi aluminé, silice-alumine, alumine-oxyde de bore, magnésie, silice-magnésie, zircone, oxyde de titane et argile ;
b) au moins un élément du groupe VI,
c) au moins un élément du groupe VIII,
d) une zéolithe Y et
e) éventuellement un autre composé dans le support.

Le document US-A-4 585 748 divulgue un catalyseur d'hydrocraquage comprenant une matrice qui peut contenir du silicium, une zéolite, un métal VI/VIII et du bore déposé par imprégnation.

Les formules décrites dans l'art antérieur ne contiennent pas de silicium déposé sur le catalyseur par imprégnation, conjointement avec le bore.

L'invention concerne un catalyseur utilisable pour l'hydrocraquage de charges hydrocarbonées. Le catalyseur contient au moins un métal hydro-déshydrogénant, de préférence choisi dans le groupe VIB et le groupe VIII de la classification périodique des éléments. Le catalyseur renferme au moins une zéolithe Y à structure faujasite au moins partiellement sous forme hydrogène et une matrice amorphe ou mal cristallisée servant de liant. Le catalyseur est caractérisé en ce qu'il renferme en outre du silicium comme élément promoteur, du bore et éventuellement du phosphore et éventuellement un élément du groupe VIIA (halogène), et de préférence le fluor, et éventuellement un élément du groupe VIIB (de préférence le manganèse, le rhénium peut également être avantageux).

Ledit catalyseur présente une activité et une sélectivité en hydrocraquage plus importante que les formules catalytiques à base de zéolithe Y désaluminées connues dans l'art antérieur.

Sans vouloir être lié par une quelconque théorie, il semble que cette activité particulièrement élevée des catalyseurs de la présente invention est due au renforcement de l'acidité du catalyseur par la présence conjointe du bore et du silicium sur la matrice ce qui induit une amélioration des propriétés en hydrocraquage par rapport aux catalyseurs utilisés habituellement.

Le catalyseur de la présente invention renferme généralement en % poids par rapport à la masse totale du catalyseur au moins un métal choisi dans les groupes suivants et avec les teneurs suivantes :

- 0,1 à 60%, de préférence de 0,1 à 50% et de manière encore plus préférée de 0,1 à 40% d'au moins un métal hydro-déshydrogénant, de préférence choisi parmi le groupe VIB et le groupe VIII (% oxyde),
- 0,1 à 99,7%, de préférence de 1 à 99% d'au moins une matrice minérale poreuse amorphe ou mal cristallisée de type oxyde,

- 0,1 à 90%, de préférence de 0,1 à 80% et de manière encore plus préférée de 0,1 à 70% d'au moins une zéolithe Y dont le paramètre de maille est compris entre 2,424 et 2,455 nm et de préférence entre 2,426 et 2,438 nm, et qui présente des caractéristiques particulières décrites ultérieurement,
- 0,1 à 20%, de préférence de 0,1 à 15% et de manière encore plus préférée de 0,1 à 10% de silicium déposés sur le support (matrice + zéolithe) et principalement localisé sur la matrice (% oxyde), et éventuellement,
- 0 à 20%, de préférence de 0,1 à 15% et de manière encore plus préférée de 0,1 à 10% de bore, avantageusement déposé sur le catalyseur,
- 0 à 20%, de préférence de 0,1 à 15% et de manière encore plus préférée de 0,1 à 10% de phosphore (% oxyde), avantageusement déposé sur le catalyseur,
- 0 à 20%, de préférence de 0,1 à 15% et de manière encore plus préférée de 0,1 à 10% d'au moins un élément choisi dans le groupe VIIA, de préférence le fluor,
- 0 à 20%, de préférence de 0,1 à 15% et de manière encore plus préférée de 0,1 à 10% d'au moins un élément choisi dans le groupe VIIB (% oxyde).

La zéolithe Y désaluminée utilisée est caractérisée par différentes spécifications :

- un paramètre cristallin compris entre 2,424 nm et 2,455 nm et de préférence entre 2,426 nm et 2,438 nm,
- un rapport molaire $SiO_2/Al_2O_3$ global supérieur à 8,
- un rapport molaire $SiO_2/Al_2O_2$ de charpente supérieur ou égal au rapport molaire $SiO_2/Al_2O_3$ global,
- une teneur en cations des métaux alcalino-terreux ou alcalins et/ou des cations des terres rares (de numéro atomique 57 à 71 inclus) telle que le rapport atomique $[n \times M^{n+}]/Al$ (n étant la charge du cation M) est inférieur à 0,8 et de préférence inférieur à 0,5 et de manière encore plus préférée inférieur à 0,1,
- une surface spécifique déterminée par la méthode B.E.T supérieure à environ 400 $m^2/g$ et de préférence supérieure à 550 $m^2/g$,
- une capacité d'adsorption d'eau à 25°C pour une valeur P/Po de 0,2, supérieure à environ 6% poids.

Les métaux du groupe VIB, du groupe VIII et du groupe VIIB du catalyseur de la présente invention peuvent être présents en totalité ou partiellement sous la forme métallique et/ou oxyde et/ou sulfure.

Les catalyseurs selon l'invention peuvent être préparés par toutes méthodes adéquates. Le silicium et le bore sont introduits par imprégnation sur le catalyseur contenant déjà le support et le ou les métaux du groupe VIB et éventuellement du groupe VIII. Un catalyseur, par exemple un catalyseur conventionnel d'hydrocraquage, de type NiMo ou NiMoP sur un support comprenant un mélange d'alumine et de zéolithe Y est imprégné par une solution aqueuse de bore et par une solution aqueuse de silicium ou bien encore imprégnée par une solution aqueuse commune de bore et de silicium.

Le silicium introduit sur le support selon l'invention, est principalement localisé sur la matrice du support et peut être caractérisé par des techniques telles que la microsonde de Castaing (profil de répartition des divers éléments), la microscopie électronique par transmission couplée à une analyse X des composants du catalyseurs, ou bien encore par l'établissement une cartographie de répartition des éléments présents dans le catalyseur par microsonde électronique. Ces analyses locales vont fournir la localisation des divers éléments, en particulier la localisation de la silice amorphe sur la matrice du support due à l'introduction du silicium selon l'invention. La localisation du silicium de la charpente de la zéolithe contenue dans le support est aussi révélée. Par ailleurs, une estimation quantitative des teneurs locales en silicium et autres éléments peut-être effectuée.

D'autre part, la RMN du solide du $^{29}Si$ à rotation à l'angle magique est une technique qui permet de détecter la présence de silice amorphe introduite dans le catalyseur selon le mode opératoire décrit dans la présente invention.

De façon plus particulière, le procédé de préparation du catalyseur de la présente invention comprend les étapes suivantes :

a) on prépare un mélange ci-après dénommé le précurseur, renfermant au moins les composés suivants : une matrice (poreuse amorphe et/ou mal cristallisée), au moins une zéolithe Y (de préférence désaluminée), au moins un élément (hydro-déshydrogénant du groupe VIB et/ou VIII), éventuellement du phosphore, le tout étant de préférence mis en forme, et de préférence séché,

b) on imprègne le solide précurseur défini à l'étape a), par une solution (de préférence aqueuse) contenant du silicium et du bore, éventuellement du phosphore et éventuellement au moins un élément du groupe VIIA, de préférence le fluor,

c) avantageusement on laisse reposer le solide humide sous une atmosphère humide à une température comprise entre 10 et 80°C,

d) on sèche le solide humide obtenu à l'étape b) à une température généralement comprise entre 60 et 150°C,

e) on calcine le solide obtenu à l'étape c) à une température généralement comprise entre 150 et 800°C.

L'étape a) ci-dessus peut être réalisée selon les méthodes classiques de l'homme du métier.

Une méthode préférée selon l'invention consiste à préparer une solution aqueuse d'au moins un sel de bore tel que le biborate d'ammonium ou le pentaborate d'ammonium en milieu alcalin et en présence d'eau oxygénée et d'introduire dans la solution un composé du silicium de type silicone et à procéder à une imprégnation dite à sec, dans laquelle on rempli le volume des pores du précurseur par la solution contenant le B et le Si. Cette méthode de dépôt du B et du Si est meilleure que la méthode conventionnelle employant une solution alcoolique d'acide borique ou une solution d'orthosilicate d'éthyle dans l'alcool. Lorsqu'on désire introduire l'élément bore seul on utilise une solution aqueuse d'au moins un sel de bore tel que le biborate d'ammonium ou le pentaborate d'ammonium en milieu alcalin et en présence d'eau oxygénée puis on procède à une imprégnation dite à sec telle que décrite ci-dessus. Lorsqu'on désire introduire l'élément silicium seul on utilise une solution aqueuse d'un composé du silicium de type silicone et on procède à une imprégnation dite à sec.

Le silicium, le bore et éventuellement le phosphore et éventuellement l'élément choisi dans le groupe VIIA des ions halogénures, de préférence F, peuvent être introduits dans le catalyseur à divers niveaux de la préparation et de manières simultanées ou séparées.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le Si le B, éventuellement le P et l'élément choisi parmi les ions halogénures du groupe VIIA, peuvent être introduits par une ou plusieurs opérations d'imprégnation avec excès de solution sur le précurseur calciné.

Ainsi, dans le cas préféré où par exemple le précurseur est un catalyseur de type nickel-molybdène supporté sur un support contenant de l'alumine et de la zéolithe Y désaluminée, il est possible d'imprégner ce précurseur par une solution aqueuse de biborate d'ammonium et/ou de silicone Rhodorsil E1P de la société Rhône-Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mise en oeuvre pour obtenir le catalyseur de la présente invention.

Ainsi, il est possible d'imprégner dans un premier temps la solution contenant le silicium, de sécher, de calciner et d'imprégner la solution contenant le bore de sécher et de procéder à une calcination finale.

Il est également possible d'imprégner dans un premier temps la solution contenant le bore, de sécher, de calciner et d'imprégner la solution contenant le silicium de sécher et de procéder à une calcination finale.

Il est aussi possible d'imprégner dans un premier temps le précurseur avec une solution contenant du phosphore, de sécher, de calciner puis d'imprégner le solide obtenu avec la solution contenant le bore, de sécher, de calciner et d'imprégner la solution contenant le silicium de sécher et de procéder à une calcination finale.

Dans le cas où les métaux sont introduits en plusieurs imprégnations des sels précurseurs correspondants, une étape de séchage intermédiaire du catalyseur est généralement effectuée à une température généralement comprise entre 60 et 250°C.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle $Si(OEt)_4$, les siloxanes, les polysiloxanes, les silicones, les émulsions de silicone, les silicates d'halogénures comme le fluorosilicate d'ammonium $(NH_4)_2 SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention peut renfermer un métal du groupe VIII tel que fer, cobalt, nickel. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, nickel-tungstène. Il est également possible d'utiliser des associations de trois métaux par exemple nickel-cobalt-molybdène. Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Les sources d'élément du groupe VIIB qui peuvent être utilisées sont bien connues de l'homme du métier. On utilise de préférence les sels d'ammonium, les nitrates et les chlorures.

Le catalyseur de la présente invention renferme donc également au moins une matrice minérale poreuse amorphe ou mal cristallisée généralement de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

On peut aussi avantageusement utiliser des mélanges d'alumine et de silice, des mélanges d'alumine et de silice-alumine et des mélanges d'alumine et d'oxyde de bore.

On peut aussi avantageusement utiliser des mélanges d'alumine et de zéolithe Y et des mélanges de silice-alumine et de zéolithe Y.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

Les catalyseurs obtenus par la présente invention sont mis en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

Les catalyseurs selon l'invention sont utilisables pour la conversion d'hydrocarbures.

Les catalyseurs obtenus par la présente invention sont en particulier utilisés pour l'hydrocraquage de charges hydrocarbonées telles que les coupes pétrolières. Les charges employées dans le procédé sont par exemple des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de craquage thermique (sans hydrogène) ou craquage catalytique en lit fluidisé (FCC) et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C. Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence à 300°C, généralement d'au plus 480°C, et souvent comprise entre 350°C et 450°C. La pression est en général supérieure à 2MPa et de préférence 3MPa, elle est inférieure à 12 MPa, et de préférence inférieure à 10 MPa. La quantité d'hydrogène est au minimum de 100 normaux litre d'hydrogène par litre de charge et souvent comprise entre 200 et 3000 normaux litre d'hydrogène par litre de charge. La vitesse volumique horaire est comprise en général entre 0,1 et 10h$^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates, la magnésie, la zircone, l'oxyde de titane. On préfère utiliser des matrices contenant de l'alumine, sous toutes ces formes connues de l'Homme du métier, et de manière encore plus préférée les alumines, par exemple l'alumine gamma. La fonction d'hydrotraitement est assurée par au moins un métal ou composé de métal du groupe VIII tels que le nickel et le cobalt notamment. On peut utiliser une combinaison d'au moins un métal ou composé de métal du groupe VIB (notamment le molybdène ou le tungstène) et d'au moins un métal ou composé de métal du groupe VIII (notamment le cobalt ou le nickel) de la classification périodique des éléments. La concentration totale en oxydes de métaux des groupes VIB et VIII est comprise entre 5 et 40 % en poids et de préférence entre 7 et 30 % en poids et le rapport pondéral exprimé en oxyde métallique en métal (ou métaux) du groupe VIB sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore P205 sera d'au plus 15% généralement, de préférence comprise entre 0,1 et 15 % en poids et de préférence comprise entre 0,15 et 10% en poids. Il peut également contenir du bore dans un rapport B/P = 1,05 - 2 (atomique), la somme des teneurs en B et P exprimée en oxydes étant de 5-15% poids.

La première étape se déroule généralement à une température de 350-460°C, de préférence 360-450°C, une pression totale d'au moins 2MPa et de préférence 3 MPa, une vitesse volumique horaire de 0,1-5h$^{-1}$ et de préférence 0.2-2h$^{-1}$ et avec une quantité d'hydrogène d'au moins 100NI/NI de charge, et de préférence 260-3000NI/NI de charge.

Pour l'étape de conversion avec le catalyseur selon l'invention (ou seconde étape), les températures sont en général supérieures ou égales à 230°C et souvent comprises entre 300°C et 430°C. La pression est en général d'au moins 2MPa et de préférence 3MPa, elle est inférieure à 12 MPa, et de préférence inférieure à 10 MPa. La quantité d'hydrogène est au minimum de 100I/I de charge et souvent comprise entre 200 et 3000I/I d'hydrogène par litre de charge. La vitesse volumique horaire est comprise en général entre 0,15 et 10h$^{-1}$. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées d'au moins 5 MPa, de préférence d'au moins 10 MPa et avantageusement d'au moins 12 MPa. Les coupes traitées sont par exemple de type distillats sous vide fortement chargée en soufre et azote qui ont été préalablement hydrotraitées. Dans ce mode d'hydrocraquage le niveau de conversion est supérieur ou égal à 55%. Dans ce cas, le procédé de conversion de coupe pétrolière se déroule en deux étapes, le catalyseur selon l'invention étant utilisé dans la deuxième étape.

Le catalyseur de la première étape est identique à celui décrit précédemment et utilisé dans les conditions décrites, la pression étant ajustée à celle de cet autre présent mode de réalisation.

Pour l'étape de conversion avec le catalyseur selon l'invention (ou seconde étape), les températures sont en général supérieures ou égales à 230°C et souvent comprises entre 300°C et 430°C. La quantité d'hydrogène est au minimum de 100l/l de charge et souvent comprise entre 200 et 3000l/l d'hydrogène par litre de charge. La vitesse volumique horaire est comprise en général entre 0,15 et 10h$^{-1}$.

Dans ces conditions, les catalyseurs de la présente invention présentent une meilleure activité en conversion et une meilleure sélectivité en distillats moyens que les catalyseurs commerciaux, même pour des teneurs en zéolithe considérablement plus faibles que celles des catalyseurs commerciaux.

Les exemples suivants illustrent la présente invention sans toutefois en limiter la portée.

Exemple 1: Préparation d'un support contenant une zéolithe Y (conforme à l'invention)

Un support de catalyseur d'hydrocraquage contenant une zéolithe Y a été fabriqué en grande quantité de façon à pouvoir préparer différents catalyseurs à base du même support. Pour cela on utilise 20,5 % poids d'une zéolithe Y désaluminée de paramètre cristallin égal à 2,429 nm et de rapport $SiO_2/Al_2O_3$ global de 30,4 et de rapport $SiO_2/Al_2O_3$ de charpente de 58 [calculé d'après la corrélation dite de Fichtner-Schmittler (dans Cryst. Res. Tech. 1984, 19, K1)] que l'on mélange à 79,5 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 223 m$^2$/g et une distribution en taille de pore monomodale centrée sur 10 nm. L'analyse de la matrice par la diffraction des rayons X révèle que celle ci est composée d'alumine gamma cubique de faible cristallinité et de zéolithe Y désaluminée.

Exemple 2 : Préparation de catalyseurs contenant une zéolithe Y

Les extrudés de support contenant une zéolithe Y désaluminée de l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ2 obtenus sont indiquées dans le tableau 1. Le catalyseur CZ2 final contient en particulier 17,1 % poids de zéolithe Y de paramètre de maille 2,429 nm de rapport $SiO_2/Al_2O_3$ global de 30,4 et de rapport $SiO_2/Al_2O_3$ de charpente de 58.

Le catalyseur CZ2 a ensuite été imprégné par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ2B. De la même manière, on a ensuite préparé un catalyseur CZ2Si par imprégnation du catalyseur CZ2 par une émulsion de silicone Rhodorsil EP1 (Rhone-Poulenc). Les extrudés imprégnés sont ensuite séchés pendant une nuit à 120°C puis calcinés à 550°C pendant 2 heures sous air sec. Enfin, un catalyseur CZ2BSi a été obtenu imprégnation du catalyseur CZ2 par une solution aqueuse renfermant le biborate d'ammonium et l'émulsion de silicone Rhodorsil EP1 (Rhone-Poulenc). Les extrudés imprégnés sont alors séchés pendant une nuit à 120°C puis calcinés à 550°C pendant 2 heures sous air sec.

Les extrudés de support contenant une zéolithe Y désaluminée de l'exemple 1 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ2P obtenus sont indiquées dans le tableau 1. Le catalyseur CZ2P final contient en particulier 16,3 % poids de zéolithe Y de paramètre de maille 2,429 nm de rapport $SiO_2/Al_2O_3$ global de 30,4 et de rapport $SiO_2/Al_2O_3$ de charpente de 58.

Nous avons imprégné l'échantillon de catalyseur CZ2P par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ2PB : NiMoP/alumine-Y dopée au bore.

Un catalyseur CZ2PSi a été obtenu par la même procédure que le catalyseur CZ2PB ci-dessus mais en remplaçant dans la solution d'imprégnation le précurseur de bore par l'émulsion de silicone Rhodorsil EP1 (Rhone-Poulenc).

Enfin, un catalyseur CZ2PBSi a été obtenu imprégnation du catalyseur par une solution aqueuse renfermant le biborate d'ammonium et l'émulsion de silicone Rhodorsil EP1 (Rhone-Poulenc). Les autres étapes de la procédure sont les mêmes que celles indiquées ci dessus. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ2PBSiF. Les caractéristiques des catalyseurs CZ2 sont résumées dans le tableau 1.

Tableau 1 :

| Caractéristiques des catalyseurs CZ2 | | | | | | | | | |
|---|---|---|---|---|---|---|---|---|---|
| Catalyseur | CZ2 | CZ2 P | CZ2 B | CZ2 Si | CZ2 BSi | CZ2 PB | CZ2 PSi | CZ2 PBSi | CZ2 PBSiF |
| $MoO_3$ (% pds) | 13,5 | 12,9 | 13,2 | 13,2 | 12,9 | 12,7 | 12,7 | 12,5 | 12,3 |
| NiO (% pds) | 3,1 | 3,0 | 3,0 | 3,0 | 3,0 | 2,9 | 2,9 | 2,8 | 2,8 |
| $P_2O_5$ (% pds) | 0 | 4,4 | 0 | 0 | 0 | 4,3 | 4,3 | 4,2 | 4,2 |
| $B_2O_3$ (% pds) | 0 | 0 | 2,0 | 0 | 2,0 | 1,8 | 0 | 1,8 | 1,9 |
| $SiO_2$ (% pds) | 16,0 | 15,3 | 15,7 | 17,7 | 17,4 | 15,1 | 16,9 | 16,6 | 15,6 |
| Complément à 100% composé majoritairement de $Al_2O_3$ (% pds) | 67,4 | 64,4 | 66,1 | 66,1 | 64,7 | 63,2 | 63,2 | 62,1 | 63,2 |

Le catalyseur CZ2P a ensuite été imprégné par une solution aqueuse renfermant du nitrate de manganèse. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ2PMn. On imprègne ensuite ce catalyseur par une solution aqueuse renfermant le biborate d'ammonium et l'émulsion de silicone Rhodorsil EP1 (Rhone-Poulenc). Les extrudés imprégnés sont alors séchés pendant une nuit à 120°C puis calcinés à 550°C pendant 2 heures sous air sec et on obtient le catalyseur CZ2PMnBSi. On ajoute ensuite à ce catalyseur du fluor par imprégnation d'une solution d'acide fluorhydrique diluée de manière à déposer environ 1 % en poids de fluor. Après séchage pendant une nuit à 120°C et calcination à 550°C pendant 2 heures sous air sec on obtient le catalyseur CZ2PMnBSiF. Les teneurs pondérales de ces catalyseurs sont indiquées dans le tableau 2.

Tableau 2 :

| Caractéristiques des catalyseurs CZ2 contenant du manganèse | | | |
|---|---|---|---|
| Catalyseur | CZ2 PMn | CZ2 PMnBSi | CZ2 PMnBSiF |
| $MoO_3$ (% pds) | 12,7 | 12,4 | 12,2 |
| NiO (% pds) | 2,9 | 2,8 | 2,8 |
| $MnO_2$ (%pds) | 1,4 | 1,3 | 1,3 |
| $P_2O_5$ (% pds) | 4,4 | 4,2 | 4,2 |
| $B_2O_3$ (% pds) | 0 | 1,9 | 1,8 |
| $SiO_2$ (% pds) | 15,1 | 16,4 | 16,2 |
| F (%pds) | 0 | 0 | 0,95 |
| Complément à 100% composé majoritairement de $Al_2O_3$ (% pds) | 63,5 | 61,0 | 60,55 |

L'analyse, par microsonde électronique, des catalyseurs CZ2Si, CZ2BSi, CZ2PSi, CZ2PBSi, CZ2PBSiF, (tableau 1) et des catalyseurs CZ2PMnBSi, CZ2PMnBSiF, (tableau 2) montre que le silicium ajouté au catalyseur selon l'invention est principalement localisé sur la matrice et se trouve sous forme de silice amorphe.

Exemple 3 : Préparation d'un support contenant une zéolithe Y désaluminée et une silice-alumine

Nous avons fabriqué une poudre de silice-alumine par coprécitation ayant une composition de 4% $SiO_2$, 96% $Al_2O_3$. Un support de catalyseur d'hydrocraquage contenant cette silice-alumine et une zéolithe Y désaluminée a été ensuite fabriqué. Pour cela on utilise 20,8 % poids de la zéolithe Y de l'exemple 1 que l'on mélange à 79,2 % poids d'une matrice composée de la silice alumine préparée ci-dessus. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 255 $m^2$/g, et une distribution en taille de pore monomodale centrée sur 11 nm. L'analyse de la matrice par la diffraction des rayons X révèle que celle ci est composée d'alumine gamma cubique de faible cristallinité et de zéolithe Y de paramètre de maille 2,429 nm et de rapport $SiO_2/Al_2O_3$ global de 15,8 et de rapport $SiO_2/Al_2O_3$ de charpente de 59.

Exemple 4 : Préparation de catalyseurs contenant une zéolithe Y désaluminée et une silice-alumine

Les extrudés de support contenant une silice-alumine et une zéolithe Y désaluminée de l'exemple 3 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur CZ18 obtenus sont indiquées dans le tableau 3. Le catalyseur CZ18 final contient en particulier 17,2 % poids de zéolithe Y. L'analyse de la matrice par la diffraction des rayons X révèle que celle ci est composée d'alumine gamma cubique de faible cristallinité et de zéolithe Y de paramètre de maille 2,428 nm et de rapport $SiO_2/Al_2O_3$ global de 15,6 et de rapport $SiO_2/Al_2O_3$ de charpente de 58.
Le catalyseur CZ18 a ensuite été imprégné par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ18B.
Les extrudés de support contenant une zéolithe Y de l'exemple 3 sont également imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur CZ18P obtenus sont indiquées dans le tableau 3. Le catalyseur CZ18P final contient en particulier 16,4 % poids de zéolithe Y. L'analyse de la matrice par la diffraction des rayons X révèle que celle ci est composée d'alumine gamma cubique de faible cristallinité et de zéolithe Y de paramètre de maille 2,428 nm et de rapport $SiO_2/Al_2O_3$ global de 15,7 et de rapport SiO2/Al2O3 de charpente de 57.
Nous avons imprégné l'échantillon de catalyseur CZ18P par une solution aqueuse renfermant du biborate d'ammonium. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé CZ18PB.
Les caractéristiques des catalyseurs CZ18 sont résumées dans le tableau 3.

Tableau 3 :

| Caractéristiques des catalyseurs CZ18 | | | | |
|---|---|---|---|---|
| Catalyseur | CZ18 | CZ18 P | CZ18 B | CZ18 PB |
| $MoO_3$ (% pds) | 13,9 | 13,3 | 13,7 | 13,1 |
| NiO (% pds) | 3,2 | 3,1 | 3,15 | 3,0 |
| $P_2O_5$ (% pds) | 0 | 4,6 | 0 | 4,5 |
| $B_2O_3$ (% pds) | 0 | 0 | 1,95 | 1,8 |
| $SiO_2$ (% pds) | 18,7 | 17,9 | 18,5 | 17,6 |
| Complément à 100% composé majoritairement de $Al_2O_3$ (% pds) | 64,2 | 61,1 | 62,7 | 60,0 |

Exemple 5 : Comparaison des catalyseurs en hydrocraquage d'un gazole sous vide à conversion partielle.

Les catalyseurs dont les préparations sont décrites dans les exemples précédents sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VIB et un élément du groupe VIII déposés sur alumine. Dans le second réacteur, celui dans lequel la charge passe en dernier, on introduit un catalyseur d'hydrocraquage décrit ci-dessus. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^- \text{ de l'effluent}$$

La sélectivité brute SB en distillats moyens est prise égale à :

$$SB = 100*\text{poids de la fraction } (150°C\text{-}380°C)/\text{poids de la fraction } 380°C \text{ - de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans le tableau 4 suivant, nous avons reporté la conversion brute CB à 400°C et la sélectivité brute SB.

Tableau 4 :

| Activités catalytiques des catalyseurs en hydrocraquage partiel à 400°C | | | | | |
|---|---|---|---|---|---|
| | | CB (%pds) | SB (%) | HDS (%) | HDN (%) |
| CZ2 | NiMo/Y | 48,1 | 80,5 | 98,86 | 95,3 |
| CZ2P | NiMoP/Y | 48,7 | 80,3 | 99,43 | 96,6 |
| CZ2B | NiMoB/Y | 49,1 | 80,5 | 98,93 | 95,6 |
| CZ2Si | NiMoSi/Y | 49,4 | 80,6 | 99,33 | 96,2 |
| CZ2BSi | NiMoBSi/Y | 49,7 | 80,1 | 99,47 | 96,6 |
| CZ2PB | NiMoPB/Y | 49,3 | 80,4 | 99,57 | 97,4 |
| CZ2PSi | NiMoPSi/Y | 49,5 | 78,9 | 99,85 | 98,3 |
| CZ2PBSi | NiMoPBSi/Y | 50,8 | 78,1 | 99,92 | 98,8 |

Les résultats du tableau 4 montrent que l'ajout de silicium, et tout particulièrement avec présence de P et/ou B apporte une amélioration des performances du catalyseur en conversion. La sélectivité brute en distillats moyen diminue du fait de l'augmentation du niveau de conversion comme il est bien connu. Les catalyseurs à base de zéolithe Y désaluminée de l'invention sont donc particulièrement intéressants pour l'hydrocraquage partiel de charge de type distillats sous vide contenant de l'azote à une pression d'hydrogène modérée.

Tableau 5 :

| Activités catalytiques des catalyseurs CZ2 et CZ18 de composition équivalentes en hydrocraquage partiel à 400°C | | | | | |
|---|---|---|---|---|---|
| | | CB (%pds) | SB (%) | HDS (%) | HDN (%) |
| CZ18 | NiMo/Y-SiAl | 48,3 | 79,9 | 98,2 | 95,1 |
| CZ2Si | NiMoSi/Y | 49,4 | 80,6 | 99,33 | 96,2 |
| CZ18P | NiMOP/Y-SiAl | 48,7 | 79,1 | 98,25 | 95,5 |
| CZ2PSi | NiMoPSi/Y | 49,5 | 78,9 | 99,85 | 98,3 |
| CZ18B | NiMoB/Y-SiAl | 49,2 | 79,8 | 98,3 | 96,1 |
| CZ2BSi | NiMoBSi/Y | 49,7 | 80,1 | 99,47 | 96,6 |
| CZ18PB | NiMoPB/Y-SiAl | 49,2 | 78,7 | 98,1 | 97,7 |
| CZ2PBSi | NiMoPBSi/Y | 50,8 | 78,1 | 99,92 | 98,8 |

Les résultats du tableau 5 montrent qu'il est avantageux d'introduire le silicium sur le catalyseur déjà préparé plutôt que sous la forme d'un support contenant du silicium obtenu à partir d'une silice-alumine. Ceci se vérifie que le catalyseur contienne du phosphore ou non. Il est donc particulièrement avantageux d'introduire le silicium sur un précurseur contenant déjà les éléments du groupe VIB et/ou VIII et éventuellement au moins l'un des éléments Pou F.
Les catalyseurs contenant une alumine acidifiée par le silicium et une zéolithe désaluminée sont donc particulièrement intéressants pour l'hydrocraquage partiel de charge de type distillats sous vide contenant de l'azote à une pression d'hydrogène modérée.

Exemple 6 : Comparaison des catalyseurs en hydrocraquage d'un gazole sous vide à haute conversion

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| Densité (20/4) | 0,869 |
|---|---|
| Soufre (ppm poids) | 502 |
| Azote (ppm poids) | 10 |
| Distillation simulée point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VI et un élément du groupe VIII déposés sur alumine.

On ajoute à la charge 0,6% poids d'aniline et 2% poids de dimethyl-disulfure afin de simuler les pressions partielles d'$HS_2$ et d'$NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Notons que toute méthode de sulfuration in-situ ou ex-situ est convenable. Une fois la sulfuration réalisée, la charge décrite ci-dessus peut être transformée. Les conditions opératoires de l'unité de test sont les suivantes

| Pression totale | 9 MPa |
|---|---|
| Catalyseur | 80 cm$^3$ |
| Température | 360-420°C |
| Débit d'hydrogène | 80 l/h |
| Débit de charge | 80 cm$^3$/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^- \text{ de l'effluent}$$

La sélectivité brute SB en distillat moyen est prise égale à :

$$SB = 100*\text{poids de la fraction } (150°C\text{-}380°C)/\text{poids de la fraction } 380°C^- \text{ de l'effluent}$$

La température de réaction est fixée de façon à atteindre une conversion brute CB égale à 70% poids. Dans le tableau 6 suivant, nous avons reporté la température de réaction et la sélectivité brute pour les catalyseurs décrits dans les tableaux 1 et 2.

Tableau 6

| Activités catalytiques des catalyseurs en hydrocraquage haute conversion (70%) | | | |
|---|---|---|---|
| | | T(°C) | SB |
| CZ2 | NiMo/Y | 375 | 65,8 |
| CZ2P | NiMoP/Y | 375 | 65,9 |
| CZ2PB | NiMoPB/Y | 374 | 66,2 |
| CZ2PSi | NiMoPSi/Y | 374 | 66,4 |
| CZ2PBSi | NiMoPBSi/Y | 372 | 66,8 |

Tableau 6   (suite)

| Activités catalytiques des catalyseurs en hydrocraquage haute conversion (70%) | | | |
|---|---|---|---|
| | | T($^{\circ}$C) | SB |
| CZ2PBSiF | NiMoPBSiF/Y | 370 | 67,5 |
| CZ2PMn | NiMoPMn/Y | 374 | 66,2 |
| CZ2PMnBSi | NiMoPMnBSi/Y | 370 | 67,3 |
| CZ2PMnBSiF | NiMoPMnBSiF/Y | 369 | 67,2 |

L'ajout de silicium au catalyseur contenant la zéolithe Y permet d'améliorer l'activité en conversion, ce qui se traduit par une diminution de la température de réaction nécessaire pour atteindre 70% de conversion et permet d'obtenir une meilleure sélectivité brute en distillats moyens. Les catalyseurs de l'invention contenant du silicium sont donc particulièrement intéressants pour l'hydrocraquage à haute conversion de charge de type distillats sous vide à une pression d'hydrogène modérée. De plus, si l'on ajoute du manganèse et/ou du fluor on constate également une amélioration de l'activité convertissante avec une légère amélioration de la sélectivité brute en distillats moyens.

**Revendications**

1.  Catalyseur renfermant une matrice minérale poreuse amorphe ou mal cristallisée de type oxyde, au moins une zéolithe Y désaluminée et possèdant un paramètre cristallin compris entre 2,424 nm et 2,455 nm, un rapport molaire $SiO_2/Al_2O_3$ global supérieur à 8, une teneur en cations des métaux alcalino-terreux ou alcalins et/ou des cations des terres rares telle que le rapport atomique (n x $M^{n+}$)/Al est inférieur à 0,8, une surface spécifique déterminée par la méthode B.E.T supérieure à 400 $m^2$/g, et une capacité d'adsorption d'eau à 25$^{\circ}$C pour une valeur P/Po de 0,2, supérieure à 6% poids, ledit catalyseur comprenant également au moins un métal hydro-déshydrogénant choisi dans le groupe formé par les métaux du groupe VI et ceux du groupe VIII, et du bore et du silicium déposés sur le catalyseur comme promoteurs, ledit catalyseur étant préparé selon les étapes suivantes :

    a) on prépare un mélange appelé précurseur, et renfermant au moins une matrice, au moins une zéolithe Y, au moins un élément hydro-déshydrogénant choisi dans le groupe formé par les métaux du groupe VI et ceux du groupe VIII, éventuellement du phosphore,
    b) on imprègne le précurseur avec une solution aqueuse contenant du silicium et du bore, éventuellement du phosphore, éventuellement au moins un halogène,
    c) on sèche et on calcine le solide obtenu.

2.  Catalyseur selon la revendication 1 renfermant également du phosphore.

3.  Catalyseur selon l'une des revendications précédentes renfermant également au moins un halogène.

4.  Catalyseur selon la revendication 3 dans lequel l'halogène est le fluor.

5.  Catalyseur selon l'une des revendications précédentes renfermant également au moins un élément du groupe VIIB.

6.  Catalyseur selon la revendication 5 dans lequel l'élément du groupe VIIB est le manganèse.

7.  Procédé de conversion de charges hydrocarbonées avec un catalyseur selon l'une des revendications 1 à 6.

8.  Procédé selon la revendication 7 pour l'hydrocraquage.

**Patentansprüche**

1.  Katalysator, der wenigstens eine poröse, amorphe oder schlecht kristallisierte mineralische Matrix vom Oxidtyp, wenigstens einen desaluminierten Y-Zeolithen umfasst und einen Kristallparameter zwischen 2,424 nm und 2,455 nm, ein Molverhältnis $SiO_2/Al_2O_3$ insgesamt über 8, einen Kationengehalt, der Erdalkali- oder Alkalimetallkationen und/oder der Seltenerdkationen derart hat, dass das Atomverhältnis (n x $M^{n+}$)/Al kleiner als 0,8 ist, eine durch das B.E.T.-Verfahren bestimmte spezifische Oberfläche über 400 $m^2$/g und ein Wasseradsorptionsvermögen bei 25°C für einen Wert P/P0 von 0,2, oberhalb von 6 Gew.-%, wobei der Katalysator auch wenigstens ein hydrierendes-dehydrierendes Metall umfasst, gewählt aus der Gruppe, die gebildet wird durch die Metalle der Gruppe VI und jene der Gruppe VIII und Bor und Silizium, abgeschieden auf einem Katalysator als Promotoren, wobei der Katalysator gemäß den folgenden stufen hergestellt wird:

a) man stellt ein so genanntes Vorläufergemisch her und welches wenigstens eine Matrix, wenigstens einen Y-Zeolithen, wenigstens ein hydrierendes-dehydrierendes Element, gewählt aus der Gruppe, die gebildet wird durch die Metalle der Gruppe VI und jene der Gruppe VIII, gegebenenfalls Phosphor umfasst,

b) man imprägniert den Vorläufer mit einer wässrigen Lösung, die Silizium und Bor, gegebenenfalls Phosphor, gegebenenfalls wenigstens ein Halogen enthält,

c) man trocknet und man kalziniert den erhaltenen Feststoff.

2. Katalysator nach Anspruch 1, der auch Phosphor umfasst.

3. Katalysator nach einem der vorhergehenden Ansprüche, der auch wenigstens ein Halogen umfasst.

4. Katalysator nach Anspruch 3, bei dem das Halogen Fluor ist.

5. Katalysator nach einem der vorhergehenden Ansprüche, der auch wenigstens ein Element der Gruppe VIIB umfasst.

6. Katalysator nach Anspruch 5, bei dem das Element der Gruppe VIIB Mangan ist.

7. Verfahren zur Umwandlung von Kohlenwasserstoffbeschickungen mit einem Katalysator nach einem der Ansprüche 1 bis 6.

8. Verfahren nach Anspruch 7 zum Hydrocracken.

**Claims**

1. A catalyst comprising an amorphous or not fully crystallized of oxide type mineral porous matrix, at least one Y zeolite which is dealuminated and has a lattice parameter in the range 2.424 nm to 2.455 nm, a global $SiO_2$/$Al_2O_3$ mole ratio is more than 8, the quantity of alkaline-earth metal cations or alkali metal cations and/or rare earth metal cations is such that the atomic ratio (n x $M^{n+}$)/Al is less than 0.8, the specific surface area, determined using the BET method, is more than 400 $m^2$/g, and the water adsorption capacity is more than 6% by weight for P/$P_0$ = 0.2 at 25°C, said catalyst also comprising at least one hydro-dehydrogenating metal selcted from the group formed by metals of group VI and group VIII and silicon and boron deposited on the catalyst as doping elements, said catalyst being prepared according to the following steps :

a) a mixture termed the precursor, comprising at least one matrix, at least one Y zeolite, at least one hydro-dehydrogenating element chosen in the group formed by metals of groups VI and VIII, and optionally phosphorous, is prepared;
b) the precursor is impregnated with an aqueous solution containing silicon and boron, optionally phosphorous, and optionally at least one halogen;
c) the solid obtained is dried and calcined.

2. A catalyst according to claim 1, also comprising phosphorous and/or boron.

3. A catalyst according to any one of the preceding claims, also comprising at least one halogen.

4. A catalyst according to claim 3, in which the halogen is fluorine.

5. A catalyst according to any one of the preceding claims, also comprising at least one group VIIB element.

**6.** A catalyst according to claim 5, in which the group VIIB element is manganese.

**7.** A process for converting hydrocarbon-containing feeds using a catalyst according to any one of claims 1 to 6.

**8.** A process according to claim 7, for hydrocracking.